Europäisches Patentamt

(19) European Patent Office

Office européen des brevets

(11) Numéro de publication: **0 020 197**
**B1**

(12) **FASCICULE DE BREVET EUROPEEN**

(45) Date de publication du fascicule du brevet:
**18.04.84**

(21) Numéro de dépôt: **80400539.5**

(22) Date de dépôt: **21.04.80**

(51) Int. Cl.³: **G 01 S 13/52**

(54) Dispositif d'élimination des échos correspondant à des cibles fixes ou à vitesse lente associé aux équipements radar aéroportés.

(30) Priorité: **23.05.79 FR 7913193**

(43) Date de publication de la demande:
**10.12.80 Bulletin 80/25**

(45) Mention de la délivrance du brevet:
**18.04.84 Bulletin 84/16**

(84) Etats contractants désignés:
**DE GB IT**

(56) Documents cités:
**FR - A - 1 310 504**
**FR - A - 1 558 183**
**FR - A - 1 563 763**
**FR - A - 2 241 077**
**US - A - 3 987 442**

(73) Titulaire: **THOMSON-CSF, 173, Boulevard Haussmann,
F-75379 Paris Cedex 08 (FR)**

(72) Inventeur: **Marchais, Jean-Claude, "THOMSON-CSF" -
SCPI 173, bld Haussmann, F-75360 Paris Cedex 08 (FR)**
Inventeur: **Brault, Roland, "THOMSON-CSF" -
SCPI 173, bld Haussmann, F-75360 Paris Cedex 08 (FR)**

(74) Mandataire: **Benoit, Monique et al, THOMSON-CSF
SCPI 173, Bld Haussmann, F-75379 Paris Cedex 08 (FR)**

Dispositif d'élimination des échos correspondant à des cibles fixes ou à vitesse lente associé aux équipements radar aéroportés

La présente invention concerne les dispositifs d'élimination des échos correspondant à des cibles fixes ou à vitesse lente associés aux équipements radar aéroportés du type Doppler, conformément au préambule de la revendication 1.

Les dispositifs d'élimination des échos fixes ou mobiles, mais se déplaçant à des vitesses lentes sont, dans les réalisations actuelles, conçues pour les radars au sol et plus particulièrement pour les radars au sol du type Doppler.

De tels radars émettent des impulsions, au moins une par direction de gisement correspondant à un secteur angulaire élémentaire, et entre deux impulsions reçoivent les signaux échos; on appelle alors récurrence distance l'ensemble des signaux échos issus d'une impulsion dans une direction donnée, dans l'intervalle de temps compris entre cette impulsion émise et la suivante, appelé également période de répétition.

Des dispositifs d'élimination des échos fixes ou mobiles mais à vitesse lente sont connus par l'art antérieur.

Un premier, tel que décrit dans le brevet français FR-A-1 563 763, utilise les filtres récurrents qui effectuent dans un circuit de soustraction la comparaison des signaux de deux récurrences successives. La spectre des échos fixes, ou de vitesse radiale nulle, est tel qu'il reste à la sortie de ce filtre des résidus d'écho fixe; ceci est a fortiori vrai pour des échos mobiles avec une vitesse radiale faible.

Le brevet français FR-A-2 241 077 décrit un dispositif d'élimination des échos correspondant à des cibles fixes ou évoluant à vitesse lente dans lequel les signaux correspondant à deux rotations successives de l'antenne sont comparés cellule par cellule, afin d'éliminer les signaux n'ayant sensiblement pas fluctué entre les deux rotations. Le dispositif décrit dans ce brevet cité ne tient pas compte de la vitesse du porteur, en particulier lorsque cette vitesse est non négligeable par rapport à la vitesse des cibles à éliminer, et n'est donc pas utilisable dans le cas d'une application aéroportée.

La présente invention vise à résoudre les problèmes précités conformément aux caractéristique techniques de la revendication 1.

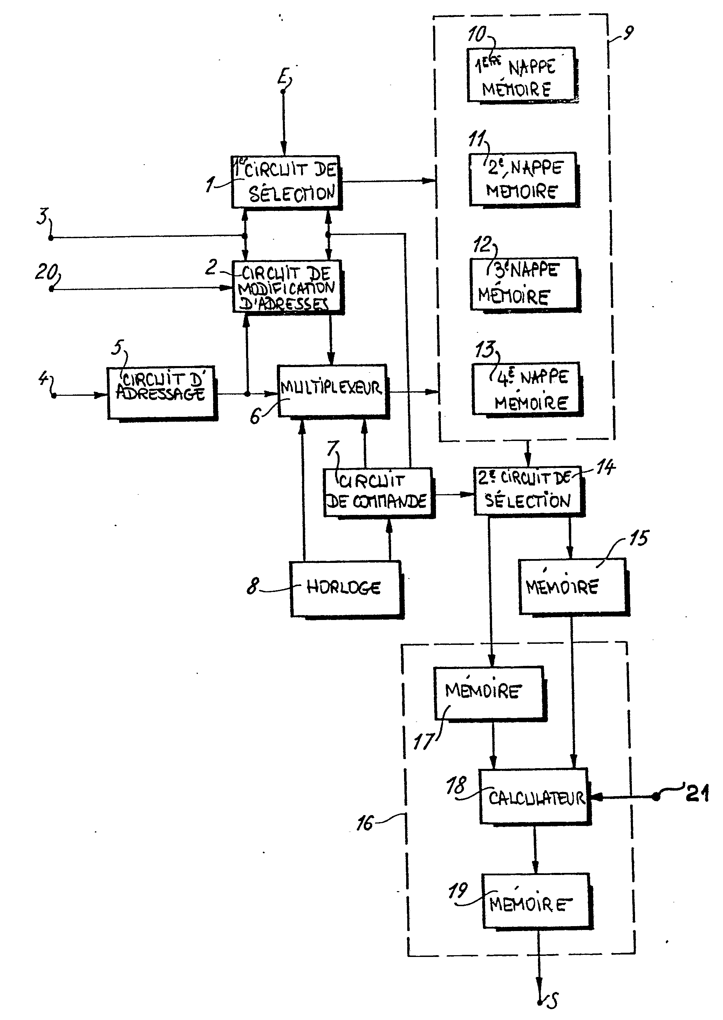

D'autres avantages et caractéristiques de l'invention apparaîtront dans la description qui suit, donnée à l'aide de la figure unique qui représente le diagramme schématique général du dispositif selon l'invention.

Il comporte une première mémoire 9 comprenant au moins quatre nappes de mémoire 10, 11, 12, 13, cette première mémoire 9 reçoit par l'intermédiaire d'un premier circuit de sélection 1, les signaux vidéo issus du récepteur radar disponibles sur une borne d'entrée E. Un second circuit de sélection 14 reçoit les signaux issus de la sortie de la première mémoire 9 et d'un circuit de commande 7; ce second circuit de sélection 14 peut être un multiplexeur et permet la sélection de la nappe la plus récente ainsi que celle correspondant au précédent balayage d'antenne dans le même sens, la première sortie de ce second circuit de sélection 14 est connectée par l'intermédiaire d'une seconde mémoire 15 à un circuit de corrélation 16, la seconde sortie directement au circuit de corrélation 16. Un multiplexeur 6 a ses entrées connectées au circuit de commande 7, à un circuit d'horloge 8, à un circuit d'adressage 5 recevant des signaux de commande d'une borne 4, et à un circuit de modification d'adresse 2. Ce circuit de modification d'adresse 2 ainsi que le premier circuit de sélection 1 reçoivent des signaux d'horloge issus d'une borne 3 et des signaux issus du circuit de commande 7; ce circuit de modification d'adresse 2 est connecté en outre à la sortie du circuit d'adressage 5 et à une borne 20 connectée à un circuit extérieur au dispositif selon l'invention, délivrant les informations nécessaires à la détermination des caractéristiques de déplacement du véhicule porteur de ce dispositif.

Le premier circuit de sélection 1 détermine la nappe du circuit mémoire 9 dans laquelle les signaux, convertis en numérique, correspondant à un balayage d'antenne, seront stockés. Le choix de la nappe de la mémoire 9 peut se faire par simple permutation circulaire. Le second circuit de sélection 14 transmet le contenu de la nappe de la mémoire 9 la plus récente au circuit de corrélation 16, et le contenu d'une seconde nappe de la mémoire 9, correspondant au balayage précédent de l'antenne dans le même sens, à une seconde mémoire 15 après avoir modifié l'adressage pour tenir compte du retard de ce précédent balayage. Cette modification d'adresse se fait de la façon suivante:

Le circuit d'adressage 5 reçoit de la borne 4 un signal contenant l'information de gisement correspondant à la direction de l'axe de l'antenne radar par rapport à l'axe du véhicule porteur. Le circuit de modification d'adresse 2 reçoit outre la valeur G du gisement issu du circuit d'adressage 5 les informations d'une borne 20 lui permettant de définir la vitesse V de l'avion, la période T de balayage de l'antenne et la distance D à laquelle se trouve la cible correspondant au gisement G; la valeur T peut être d'ailleurs contenue en permanence dans le circuit de modification d'adresse 2. Celui-ci calcule alors la valeur:

$$\Delta G = \text{arc tg}\left[\frac{V.T \sin G}{D + VT \cos G}\right]$$

$$\Delta D = D\left[\left(1 + 2\frac{V.T}{D} \cdot \cos G + \frac{V^2 T^{2\frac{1}{2}}}{D^2}\right) - 1\right]$$

ces valeurs $\Delta G$ et $\Delta D$ déterminent les modifications de position prévisibles de l'écho considéré entre deux balayages successifs et de même sens de l'antenne, et donc les modifications d'adresse de la seconde nappe de la mémoire 9. Ces modifications d'adresse sont appliquées à la nappe concernée de la première mémoire 9 par l'intermédiaire du multiplexeur 6 qui reçoit par ailleurs du circuit d'adressage 5 la valeur du gisement G permettant d'effectuer les modifications d'adresse en agissant par balayage progressif de l'angle de gisement G. Le rythme de cet adressage par les différents quanta distance d'un même angle de gisement G est donné par le signal d'horloge issu de la borne 3. Le passage du traitement d'une nappe à une autre, c'est-à-dire d'un sens de balayage d'antenne au sens contraire est déclenché par le circuit de commande 7. Le choix de la nappe de la première mémoire 9 par le premier circuit de sélection 1 peut se faire simplement par permutation circulaire.

Le circuit de corrélation 16 reçoit donc le contenu non modifié d'une première nappe de la première mémoire 9 correspondant au dernier balayage d'antenne et le contenu d'une seconde nappe de cette même première mémoire 9 correspondant au balayage de l'antenne précédent dans le même sens dont les adresses ont été modifiées lors de son inscription pour tenir compte du décalage de temps, et donc de position, dû au déplacement du véhicule porteur du présent dispositif.

Ce circuit de corrélation 16 va donc comparer les signaux des deux nappes de la première mémoire 9 ayant des adresses identiques et rejeter ces signaux si la corrélation est positive. Il va en plus tester de la même façon la corrélation avec les signaux à des adresses correspondant aux cases mémoires voisines. On peut ainsi tester la corrélation des signaux d'une adresse de la première nappe avec les signaux de la seconde nappe à des adresses correspondant à des zones de tailles variables centrées sur l'adresse de la seconde nappe correspondant à celle de la première nappe. Cette largeur de zone est déterminée par un signal issu d'une borne 21.

Ce circuit de corrélation 16 peut à titre d'exemple non limitatif être constitué d'une troisième mémoire 17 recevant la nappe de la première mémoire 9 dont les adresses ont été modifiées, un calculateur 18 recevant le signal de commande d'une borne 21, ce calculateur 18 effectuant les tests de corrélation et délivrant les signaux restant à une quatrième mémoire 19 reliée au circuit de visualisation par l'intermédiaire d'une borne de sortie S.

Le circuit d'horloge 8 règle la cadence de sortie des informations du premier circuit mémoire 9 et de la sélection des nappes par le second circuit de sélection 14. L'utilisation de ce circuit d'horloge 8 séparé provient du fait qu'il est en pratique difficile d'obtenir une synchronisation avec un balayage d'antenne qui n'est pas rigoureusement constant.

Le calculateur 18 peut, à titre d'exemple non limitatif, comporter un microprocesseur effectuant les opérations de corrélation entre les contenus des deux nappes de la mémoire 9, le signal de commande issu de la borne 21 correspondant alors à une modification de la programmation de ce microprocesseur.

## Revendications

1. Dispositif d'élimination des échos de cibles fixes ou mobiles à vitesse lente associé à un émetteur-récepteur radar aéroporté du type Doppler et à une antenne balayant alternativement dans un sens et dans l'autre, dispositif recevant, des sorties vidéo du récepteur radar sur une borne E, les séquences successives qui correspondent chacune à un balayage dans un sens donné de l'antenne et dont les signaux sont codés sous forme de mots binaires, et comprenant des moyens (9, 10, 11, 12, 13) de mémorisation de mots binaires moyens, dans lesquels sont stockés les signaux issus des derniers balayages d'antenne à des adresses définies chacune par l'angle de gisement G de la direction de pointage du radar et la distance D de la cible dans cette direction, et des moyens de corrélation (16) qui reçoivent le contenu des moyens de mémorisation (9, 10, 11, 12, 13) correspondant aux deux derniers balayages d'antenne dans le même sens, caractérisé en ce qu'il comprend en outre des moyens (2) de modification d'adressage qui comportent en mémoire ou reçoivent la valeur T représentant la durée d'un balayage d'antenne, qui reçoivent en permanence les valeurs de la vitesse V du porteur, de l'angle de gisement G de la direction de pointage de l'antenne et de la distance D à laquelle se trouve la cible correspondant à cette valeur G de l'angle de gisement, et qui calculent les grandeurs

$$\Delta G = \operatorname{arctg} \frac{V.T. \sin G}{D + V.T. \cos G}$$

$$\Delta D = D.\left[ \sqrt{1 + 2\frac{V.T. \cos G}{D} + \frac{V^2.T^2}{D^2}} - 1 \right]$$

afin de déterminer les adresses corrigées (G−$\Delta G$, D+$\Delta D$) auxquelles sont inscrits les mots binaires correspondant à l'avant-dernier balayage d'antenne, le circuit de corrélation (16) ne délivrant alors que les signaux du dernier balayage n'ayant pas de correspondant à la même adresse ou à des adresses voisines pour l'avant-dernier balayage de même sens.

2. Dispositif selon la revendication 1, caractérisé en ce que les moyens de mémorisation (9) comprennent au moins quatre circuits mémoire à grande capacité (10, 11, 12, 13), désignés sous le nom de nappes de mémoire, dans lesquelles sont stockés les signaux issus des derniers balayages de l'antenne dans l'un et l'autre sens, en ce qu'un circuit (14) sélectionne les nappes de mémoire et est connecté au circuit de corrélation (16) d'une part par l'intermédiaire d'une mémoire tampon (15) et d'autre part à l'aide d'une liaison directe.

3. Dispositif selon la revendication 1 ou 2, caractérisé en ce que le nombre d'adresses voisines testées par le circuit de corrélation (16) est réglable par un signal extérieur issu d'une borne (21).

4. Dispositif selon l'une quelconque des revendications 1 à 3, caractérisé en ce qu'il comporte en outre un premier circuit de sélection qui est connecté entre la borne d'entrée (E) du dispositif recevant les signaux vidéo du récepteur radar et les moyens de mémorisation (9, 10, 11, 12, 13), ce premier circuit de sélection ainsi que les moyens (2) de correction d'adressage recevant un signal d'horloge issu d'une borne (3) correspondant au début de chaque balayage d'antenne.

5. Dispositif selon l'une quelconque des revendications 1 à 4, caractérisé en ce qu'il comporte en outre un circuit d'adressage (5) connecté à l'entrée des moyens (2) de modification d'adressage et un multiplexeur (6) alimenté par les signaux de sortie des moyens (2) de modification d'adressage, du circuit d'adressage (5), d'un premier circuit (8) horloge synchronisé avec le balayage de l'écran de visualisation et d'un deuxième circuit (7) horloge déterminant le rythme de sortie des séquences des moyens de mémorisation (9), le multiplexeur (6) commandant les moyens de mémorisation (9).

6. Dispositif selon la revendication 3, caractérisé en ce que le signal issu de la borne (21) correspond à une modification de la programmation du circuit de corrélation (16) qui comporte au moins un calculateur (18).

7. Dispositif selon la revendication 6, caractérisé en ce que le calculateur (18) comporte un circuit du type microprocesseur.

**Patentansprüche**

1. Vorrichtung zur Unterdrückung der Echos von ortsfesten oder sich langsam bewegenden Zielen in einem Radarsende- und -empfangsgerät vom Dopplertyp, das sich in einem Flugzeug befindet, wobei eine Antenne abwechselnd in eine und in eine andere Richtung schwenkt und die Vorrichtung von Bildsignalausgängen des Radarempfängers über einen Anschluss E die aufeinanderfolgenden Sequenzen zugeführt erhält, die je einem Schwenk der Antenne in einer gegebenen Richtung entsprechen und deren Signale in Form von Binärwörtern kodiert sind, und wobei die Vorrichtung Speichermittel (9, 10, 11, 12, 13) für Binärwörter, nämlich Mittel, in denen die bei dem letzten Antennenschwenk entstandenen Signale unter Adressen abgespeichert werden, die je durch den Ablagewinkel G der Zielrichtung des Radars und durch den Abstand D des Ziels in dieser Zielrichtung definiert sind, und Korrelationsmittel (16) enthält, die den Inhalt der Speichermittel (9, 10, 11, 12, 13) zugeführt erhalten, welcher den beiden letzten Schwenkperioden der Antenne in derselben Richtung entspricht, dadurch gekennzeichnet, dass sie ausserdem Mittel (2) zur Veränderung der Adressierung aufweist, die den Wert T der Dauer eines Antennenschwenks gespeichert halten oder zugeführt bekommen sowie dauernd die Werte der Geschwindigkeit V des Trägers, des Ablagewinkels G der Zielrichtung der Antenne und des Abstands D, in dem sich das diesem Wert G des Ablagewinkels entsprechende Ziel befindet, zugeführt bekommen und die Grössen

$$\Delta G = \text{arctg} \ \frac{V.T.\sin G}{D + V.T.\cos G}$$

$$\Delta G = D.\left[ \sqrt{1 + 2\frac{V.T.\cos G}{D} + \frac{V^2.T^2}{D^2}} - 1 \right]$$

berechnen, um die korrigierten Adressen (G−ΔG, D+ΔD) zu bestimmen, an denen die dem vorletzten Antennenschwenk entsprechenden Binärwörter eingeschrieben werden, wobei der Korrelationsschaltkreis (16) dann nur die Signale des letzten Antennenschwenks liefert, die keine Entsprechung an derselben Adresse oder an benachbarten Adressen für den vorletzten Antennenschwenk in derselben Richtung finden.

2. Vorrichtung nach Anspruch 1, dadurch gekennzeichnet, dass die Speichermittel (9) mindestens vier Speicherschaltkreise grosser Kapazität (10, 11, 12, 13) aufweisen, die Speicherschichten bezeichnet werden und in denen die während des letzten Antennenschwenks in der einen oder anderen Richtung entstandenen Signale gespeichert werden, und dass ein Schaltkreis (14) die Speicherschichten auswählt und an den Korrelationsschaltkreis (16) einerseits über einen Pufferspeicher (15) und anderseits über eine direkte Verbindung angeschlossen ist.

3. Vorrichtung nach Anspruch 1 oder 2, dadurch gekennzeichnet, dass die Anzahl der vom Korrelationsschaltkreis (16) überprüften Nachbaradressen über ein von aussen an einen Anschluss (21) gelangendes Signal eingestellt werden kann.

4. Vorrichtung nach einem beliebigen der Ansprüche 1 bis 3, dadurch gekennzeichnet, dass sie ausserdem einen ersten Auswahlschaltkreis aufweist, der zwischen den Eingangsanschluss (E) der Vorrichtung, an dem die Bildsignale des Radarempfängers ankommen, und den Speichermitteln (9, 10, 11, 12, 13) angeschlossen ist, wobei dieser erste Auswahlschaltkreis sowie die Mittel (2) zur Adressenkorrektur ein Taktsignal zugeführt erhalten, das von einem Anschluss (3) stammt und dem Beginn jedes Schwenkzyklus der Antenne entspricht.

5. Vorrichtung nach einem beliebigen der Ansprüche 1 bis 4, dadurch gekennzeichnet, dass sie ausserdem einen Adressierschaltkreis (5) enthält, der an den Eingang der Mittel (2) zur Adressenveränderung angeschlossen ist, und einen Multiplexer (6), der die Ausgangssignale der Mittel (2) zur Adressenveränderung, des Adressierschaltkreises (5), eines ersten mit der Abtastung des Bildschirmes synchronisierten Taktschaltkreises (8) und eines zweiten, den Ausgangstakt der aus den Speichermitteln (9) kommenden Sequenzen bestimmenden Taktschaltkreises (7) zugeführt erhält, wobei der Multiplexer (6) die Speichermittel (9) steuert.

6. Vorrichtung nach Anspruch 3, dadurch gekennzeichnet, dass das am Anschluss (21) verfügbare Signal einer Veränderung der Programmierung des Korrelationsschaltkreises (16), der mindestens einen Rechner (18) enthält, entspricht.

7. Vorrichtung nach Anspruch 6, dadurch gekennzeichnet, dass der Rechner (18) einen Mikroprozessor-Schaltkreis enthält.

## Claims

1. A device for eliminating echos of fixed or slowly moving targets in connection with a Doppler type airborne radar emitter-receiver and with an antenna sweeping alternately in one and the other direction, this device being fed from the video outputs of the radar receiver via a terminal E, by the successive sequences corresponding each to an antenna sweep in a given direction, the signals of these sequences being coded in binary words, further comprising memory means (9, 10, 11, 12, 13) for storing binary words, these means containing the signals relating to the latest antenna sweep at address locations defined each by the offset angle G of the radar axis and by the distance D of the target in this direction, and comprising correlation means (16) which receive the contents of the memory means (9, 10, 11, 12, 13) corresponding to the two latest antenna sweeps in this very direction, characterized in that it further comprises address modification means (2) which contain in the memory or receive the value T representing the duration of one antenna sweep, which receive permanently the values relating to the carrier velocity V, to the offset angle G of the antenna axis and to the distance D in which the target corresponding to this value G of the offset angle is located, and which calculates the values of

$$\Delta G = arctg \frac{V.T. \sin G}{D+V.T. \cos G}$$

and

$$\Delta G = D.\left[\sqrt{1+2\frac{V.T. \cos G}{D}+\frac{V^2.T^2}{D^2}} -1\right]$$

in order to determine the corrected addresses (G−ΔG, D+ΔD) under which the binary words corresponding to the penultimate antenna sweep are registered, the correlation circuit (16) thus furnishing only such signals of the latest sweep which have no corresponding signals at the same address or at adjacent addresses relating to the penultimate sweep in this very direction.

2. A device according to claim 1, characterized in that the memory means (9) comprise at least four memory circuits of large capacity (10, 11, 12, 13) called memory sheets, in which the signals relating to the latest antenna sweeps in one or the other direction are stored, and that a circuit (14) selects the memory sheets and is connected to the correlation circuit (16) on the one hand via a buffer memory (15) and on the other hand via a direct connection.

3. A device according to claim 1 or 2, characterized in that the number of adjacent addresses under test by the correlation circuit (16) can be controlled by an external signal applied to a terminal (21).

4. A device according to any one of claims 1 to 3, characterized in that it further comprises a first selection circuit which is connected between the input terminal (E) of the device which receives the video signals of the radar receiver, and the memory means (9, 10, 11, 12, 13), this first selection circuit and the address correction means (2) receiving a clock signal coming from a terminal (3) at the beginning of each antenna sweep.

5. A device according to any one of claims 1 to 4, characterized in that it further comprises an addressing circuit (5) which is connected to the input of the address modification means (2), and a multiplexer (6) fed by the output signals of the address modification means (2), of the addressing circuit (5), of a first clock circuit (8) synchronized with the visualization screen scan, and of a second clock circuit (7) which determines the output rhythm of the sequences coming from the memory means (9), the multiplexer (6) controlling the memory means (9).

6. A device according to claim 3, characterized in that the signal which is applied to the terminal (21) corresponds to a modification of the programmation of the correlation circuit (16) which circuit comprises at least one computer (18).

7. A device according to claim 6, characterized in that the computer (18) comprises a circuit of the microprocessor type.